Europäisches Patentamt

European Patent Office

Office européen des brevets

(11) Publication number: **0 077 596**
**B1**

(12) **EUROPEAN PATENT SPECIFICATION**

(45) Date of publication of patent specification: **21.01.87**

(21) Application number: **82201317.3**

(22) Date of filing: **21.10.82**

(51) Int. Cl.⁴: **F 16 K 31/163,** F 15 B 15/08, F 15 B 15/06

(54) Cylinder/piston device provided with resetting means.

(30) Priority: **21.10.81 NL 8104773**

(43) Date of publication of application:
**27.04.83 Bulletin 83/17**

(45) Publication of the grant of the patent:
**21.01.87 Bulletin 87/04**

(84) Designated Contracting States:
**DE FR GB IT NL SE**

(56) References cited:
**DE-A-2 012 765**
**DE-A-2 636 117**
**DE-A-2 647 385**
**FR-A-2 071 328**
**FR-A-2 214 853**
**FR-A-2 457 425**
**FR-A-2 461 180**
**US-A-4 087 074**

(73) Proprietor: **El-O-Matic B.V.**
**No. 4 Westermaatsweg**
**NL-7556 BT Hengelo (NL)**

(72) Inventor: **Schwind, Heinz Günter**
**No. 40, Kees van Baarenstraat**
**NL-7558 DD Hengelo (Ov.) (NL)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a rotary driving device according to the preamble of the main claim.

Such a rotary driving device is known from DE—A—2 012 765. This known driving device comprises one piston which can be moved back and forth by suitable supply of pressure medium. The reset cylinder can be kept pressurized, such that the reset piston is kept out of operative engagement with the force transferring rod, which is fixed to the main piston.

With a given maximum pressure of the pressure medium and a given piston area the known driving device can develope a certain maximum rotary driving power. In applications in which this maximum rotary driving power is insufficient, it is further known to use a device comprising two driving pistons which are oppositely movable and both act in cooperation on the outgoing shaft.

The invention has for its object to provide a rotary driving device of the kind set forth above having two oppositely movable driving pistons and which is compact.

This objective is achieved with the measures of the characterizing part of the claim. In this way the necessary spring power for resetting both driving pistons can be housed in only one short reset cylinder with a larger diameter than the main cylinder. As the force transferring rod, which is itself guided in the cylinder wall, is fixed to the reset piston, assists in guiding the reset piston, this piston itself can have only a small width.

From US—A—4 087 074 a rotary driving device is known with two oppositely movable and cooperating driving pistons and spring cylinder resetting means. Only one large reset spring is used and the reset piston is always maintained in engagement with one of the driving pistons via the force transferring rod.

The invention will now be described more fully with reference to an embodiment of the driving device in accordance with the invention shown in the Figures.

Fig. 1 is a longitudinal sectional view of a rotary driving device.

Fig. 2 is a cross-sectional view taken on the line II—II in Fig. 1.

The device 1 for rotational drive comprises a cylinder 2 having two pistons 3, 4 movable therein in opposite senses. Each piston 3, 4 has three extensions 5 and 6 respectively serving to satisfactorily guide the pistons in the cylinder 2. Two opposite extensions 5, 6 are provided with toothed racks 7 and 8 respectively, which engage a pinion 12 of a transverse shaft 9 rotatably mounted in the device 1. At one end the cylinder 2 is closed by a cover 10 and at the other end by a cover 11.

The device 1 furthermore comprises means for feeding pressure medium to the cylinder from a pressure-medium source 28. The space bounded by the pistons 3, 4 in the cylinder 2 communicates through a channel 16 with a port 15 in a cover 10.

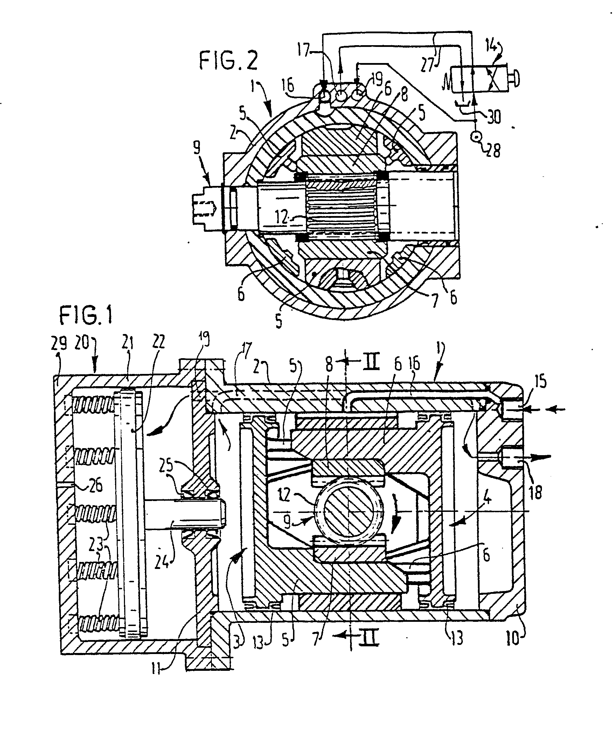

The two distal sides of the pistons 3, 4 bounding the spaces in the cylinder 2 are connected with one another through a channel 17. The space on the side of the cover 10 communicates with the port 18. The ducts 27 connected with the ports 15, 18 include a valve 14 by means of which pressure medium can be fed at will from the pressure-medium source 28 to one of the ports 15, 18. At the same time pressure medium is conducted away from the other of the ports 15, 18 towards a reservoir 30. In the position of the valve 14 shown in Figs. 1 and 2 pressure medium is fed from the source 28 to the port 15. The pressure medium flows through the channel 16 into the space between the pistons 3, 4 and pushes these pistons away from one another so that the transverse shaft 9 turns in the direction of the arrow 31. The displaced oil flows through channel 17 and the port 18 to the reservoir 30. The pistons 2, 3 are provided with sealing rings 13 establishing sealing relationship between the pistons and the cylinder.

This device comprises reset means 20 embodying the invention. The reset means 20 comprise a cylinder 21 connected with the cylinder 2 of the driving device. This cylinder comprises a slidable piston 22. On the side of the reset piston 22 remote from the driving pistons 3, 4 energy storing means formed by springs 23 are bearing on the head wall 29 of the cylinder 21. With the reset piston 22 is connected a piston rod 24 extending through an orifice in the cover 11 provided with sealing rings 25. In the position shown in Fig. 1 the piston rod 24 is not in contact with the driving piston 3 since pressure medium is introduced through the inlet 19 into the cylinder 21. The piston 22 has therefore moved to the left against the force of the springs 23. The air thus displaced by the piston 22 has escaped through the vent channel 26 in the head wall 29. As long as the pressure medium introduced via the inlet 19 is pressurized, the reset piston 22 remains in the position shown in Fig. 1.

When the pressure-medium source 28 drops out so that the pressure medium does no longer exert pressure on the reset piston 22, the springs 23 urge the reset piston 22 to the right. Thus the piston rod 24 comes into contact with the driving piston 3 and urges the same back into its rest position.

In the figures the connections of the driving cylinder with the pressure-medium source are shown schematically. It will be obvious that these connections are always designed so that the operation of the reset means is not hindered.

In the event the reset means embodying the invention serve as safety means, the inlet is preferably connected each time directly with the pressure-medium source so that at a drop-out of the pressure the reset means become operative. However, if desired, as an alternative the inlet may be connected with the pressure-medium source so that the reset means can be switched on independently of the drop-out of pressure from the pressure-medium source.

## Claim

A rotary driving device (1) comprising a main cylinder (2), at least one driving piston (3) slidably arranged in said main cylinder, an outgoing shaft (9), rotatingly mounted to the cylinder, a drive mechanism (8, 7, 12) engaging the driving piston and the shaft and converting a sliding movement of the driving piston into a rotary movement of the shaft, and reset means (20), said reset means comprising a reset cylinder (21), a force transferring rod (24) sealingly guided (25) through a cylinder wall (11) opposite the driving piston (3) and capable of force transferral between the reset piston (22) and the driving piston (3), and spring means (23) urging said reset piston in a direction to reset the driving piston by means of the rod (24), pressure medium feeding means (15—19) being provided, capable of feeding pressure medium to the reset cylinder for holding the reset piston against the effect of the spring means, and to the main cylinder at respective sides of the driving piston, characterized in that the driving device is of the type comprising a second driving piston (4) oppositely movable to and cooperating with the first driving piston (3), in that the spring means comprise a number of coil springs (23) mounted in parallel, each acting on the reset piston (22), in that the one reset piston (22) has a larger section than the driving pistons (3, 4) and in that the force transferring rod (24) is fixed to the reset piston (22) for guiding the reset piston and preventing skew thereof.

## Patentanspruch

Drehantrieb (1) mit einem Hauptzylinder (2), mit wenigstens einem Antriebskolben (3), der in dem Hauptzylinder verschiebbar ist, mit einer Abtriebswelle (9), die drehbar am Zylinder gelagert ist, mit einem Antriebs-mechanismus (8, 7, 12), der am Antriebskolben und der Welle angreift und die hin- und hergehende Bewegung des Antriebskolbens in eine Drehbewegung der Welle umsetzt und mit Rückstellmitteln (20), die einen Rückstellzylinder (21), eine Kraftübertragungsstange (24), die dichtend (25) durch eine Zylinderwand (11) gegenüberliegend dem Antriebskolben (5) geführt und in der Lage ist, eine Kraftübertragung zwischen dem Rückstellkolben (22) und dem Antriebskolben (3) durchzuführen und mit einer Feder (23), die den Rückstellkolben in einer Richtung versetzt, in der der Antriebskolben durch die Stange (24) zurückgestellt wird, und mit einer Druckmittelzuführungsvorrichtung (15 bis 19), die ein Druckmittel dem Rücksetzzylinder zuführt, um den Rücksetzkolben gegen die Wirkung der Feder zu halten, und die außerdem das Druckmittel nach dem Hauptzylinder auf die jeweiligen Seiten des Antriebskolbens fördert, dadurch gekennzeichnet, daß die Antriebsvorrichtung von jener Bauart ist, die einen zweiten Antriebskolben (4) aufweist, der mit dem ersten Antriebskolben (3) zusammenwirkt und im Gegensinn zu diesem beweglich ist, daß die Feder aus mehreren Schraubenfedern (23) besteht, die parallel zueinander geschaltet sind, wobei jede auf den Rückstellkolben (22) einwirkt, und daß der eine Rückstellkolben (22) eine größere Fläche aufweist als die Antriebskolben (3, 4), und daß die Kraftübertragungsstange (24) am Rückstellkolben (22) fixiert ist, um dem Rückstellkolben zu führen und ein Abkippen desselben zu verhindern.

## Revendication

Dispositif d'entraînement rotatif (1), comprenant un cylindre principal (2), au moins un piston d'entraînement (3) disposé coulissant dans ledit cylindre principal, un arbre de sortie (9) monté rotatif sur le cylindre, un mécanisme d'entraînement (8, 7, 12) en prise avec le piston d'entraînement et avec l'arbre et transformant un mouvement de coulissement du piston d'entraînement en un mouvement de rotation de l'arbre, et des moyens de rappel (20), lesdits moyens de rappel (20) comprenant un cylindre de rappel (21), une tige transmetteuse de force (24) qui est guidée de manière étanche (25) à travers une paroi cylindrique (11) faisant face au piston d'entraînement (3) et qui est capable de transmettre une force entre le piston de rappel (22) et le piston d'entraînement (3), et des moyens à ressort (23) poussant ledit piston de rappel dans une direction telle que le piston d'entraînement est rappelé au moyen de la tige (24), des moyens d'alimentation en fluide de pression (15—19) étant prévus, lesquels sont capables d'alimenter en fluide de pression le cylindre de rappel afin de maintenir le piston de rappel à l'encontre de l'action des moyens de ressort, et d'alimenter en fluide de pression le cylindre principal de chaque côté du piston d'entraînement, caractérisé en ce que le dispositif d'entraînement est d'un type comprenant un second piston d'entraînement (4) déplaçable en sens opposédu premier piston d'entraînement (3) et coopérant avec ce dernier, en ce que les moyens à ressort consistent en un certain nombre de ressorts hélicoïdaux (23) montés en parallèle, qui agissent tous sur le cylindre de rappel (22), en ce que l'unique piston de rappel (22) a une section supérieure à celle des pistons d'entraînement (3, 4) et en ce que la tige transmetteuse de force (24) est fixée au piston de rappel (22) afin de guider ce dernier et d'empêcher qu'il ne soit déjeté.

0 077 596

FIG.2

FIG.1